# EUROPEAN PATENT APPLICATION

(11) **EP 4 620 999 A1**
(43) Date of publication of application: **24.09.2025**
(21) Application number: 25164256.7
(22) Date of filing: 17.03.2025
(51) Int. Cl.: C08J 3/22, B29C 71/02, C08J 11/04

(54) **PROCESS FOR THE RECYCLING OF WASTE OF ADHESIVE TAPE AND POLYMERIC COMPOSITE THUS OBTAINED**

(30) Priority: 18.03.2024 IT 202400006010
(71) Applicant: Seta Polymers Srl, 35014 Fontaniva (PD) (IT)
(72) Inventor: RIELLO, Lorenzo, 35014 Fontaniva (PD) (IT)
(74) Representative: Susanetto, Carlo

(57) **Abstract**

The present invention relates to a process for the recycling of adhesive tape waste comprising mixing in melt phase a formulation comprising from 0% to 95% by weight of one or more virgin or recycled thermoplastic polymers, from 5% to 99.5% by weight of adhesive tape waste, and alkaline earth metal oxides and/or hydroxides.

## Description

### Technical area

The present invention relates to a process for the recycling of adhesive tape waste having the features set forth in the main claim, as well as to a polymeric composite obtained from this process, which may be used for the manufacture of articles, as such or as a masterbatch.

### Technological background

Adhesive tapes find a wide diffusion in daily life and are applied in multiple sectors also thanks to the different forms of realization on the market.

In general, however, the process for the production of adhesive tapes is quite common among the various types of tape and can be summarised schematically in four main phases:
- preparation of the adhesive and a support layer;
- spreading an adhesive layer on the support layer;
- cutting the support layer with the adhesive on it into strips of tape of the desired width and length;
- winding on a reel and final packaging.

The operation of longitudinal cutting of the support layer generally involves discarding the laterally outermost strips of the support layer.

Waste can also be generated due to defects in the preparation of the adhesive, in its spreading, in the process of rolling the tape around the reel, or due to incorrect storage of the adhesive tape itself, for example at a too high temperature or with excessive humidity, or following storage beyond its normal duration.

Although they do not have a real expiration date, some adhesive tapes can be subject to changes over time in their aesthetic, physical and performance characteristics. Some of them should be used within 6 months, others can be safely used after 12 or 24 months, while others can be stored for 5 years without deterioration.

For at least some of the reasons indicated above, a non-negligible fraction of the adhesive tape produced is discarded, with an annual generation of waste that, at the Italian level, can be estimated at around a few thousand tons. However, the recycling of such waste is hampered by several factors, the first of which is the structure of the adhesive tape itself.

As anticipated above, the adhesive tape typically consists of two superimposed layers, an adhesive layer, which allows adhesion to a substrate, and a support layer for the adhesive layer itself, wound around a core that serves as a support.

Typically the weight ratio between the support layer and the adhesive layer is between 5:1 and 3:1, while the respective thicknesses are generally between 25 and 40 microns for the support layer and between 4 and 8 microns for the adhesive layer.

The support layer can be made of a wide variety of materials, such as paper, foams, nets, cloth, gauze, rubber, polymeric film, for example polyethylene (PE), polyvinyl chloride (PVC), polypropylene (PP) and polyethylene terephthalate (PET). The most prevalent adhesive tape typically has a polyolefin type support layer, usually PP.

The adhesive can also consist of materials of a very different nature, usually defined as a whole as compounds, which can be based on natural rubber, hot melt (mixture of synthetic rubbers, synthetic and natural resins and various additives, obtained by heating and cooling after application), aqueous emulsions/dispersions (based on usually acrylic polymers) or organic solvent-based acrylics (i.e. acrylic polymers dissolved in organic solvents).

Typically, the adhesive is characterized by an acidic or esteric nature, responsible for its sticky nature.

The type of adhesive has a great impact on the final use; in fact, resistance to temperatures, temperature changes and ultraviolet radiation are just some of the aspects that can vary, even significantly, depending on the specific adhesive.

Depending on the use, both layers can also contain numerous additives to improve their various characteristics, such as stability to UV rays, yellowing, humidity and ageing.

The two layers forming the adhesive tape are also difficult to separate, so the recovery of the individual components is technologically complicated and economically expensive; at the same time, the recycling of such waste is hindered by the different nature, both physical and chemical, of the two layers.

Recycling is also further complicated by the possible presence, in some adhesive tapes, of additional layers. Indeed, some adhesive tapes may comprise, in addition to the support and adhesive layer, also a release layer and a primer layer.

The release layer is deposited on the support layer on the opposite side to that of the adhesive, and allows the tape to unwind easily, while the primer layer is located between the support layer and the adhesive layer and is responsible for anchoring the adhesive layer to the support layer.

A further obstacle to the recycling of such waste is the nature of the adhesive itself, which can include many components and the fact that, being sticky, it prevents easy handling of the waste itself. Moreover, even when such waste is extruded and transformed into granules, the problem of stickiness remains, as the adhesive component tends to exude emerging to the surface of the granule.

For all these reasons, this waste is currently mainly destined for an incineration process, with a consequent impact on emissions into the atmosphere.

Alternatively, only the support layer is recovered and recycled, once the adhesive layer has been removed.

The removal of the adhesive layer usually takes place by washing with aqueous solutions of alkaline substances, such as alkali oxides and hydroxides. Typically, such washes are performed with aqueous solutions of KOH or NaOH at high temperatures.

These washes are extremely expensive, both in terms of cost, of raw materials and disposal of spent solutions, and in terms of time.

Such washes may also degrade the material constituting the support layer, if not properly managed in terms of duration, temperature and concentration of alkali oxides or hydroxides. After the washing step with the alkaline aqueous solutions, there is also usually a rinsing step, in order to remove precisely such alkaline substances that, remaining on the material, would degrade it over time.

Alternatively, such waste could also be subjected to washes with polar solvents capable of dissolving the adhesive and not the support. However, also in this case, the management of the solvent before and after the washing operation would be very expensive and environmentally not very compatible. An alternative process envisages using this waste for the preparation of polymeric composites; however, the percentage of waste in such composites is never greater than 2-3% by weight with respect to the composite, because during the step of making the composite, which typically takes place in the extruder, the one of granulating it, the one of storing the granule or the one of its use for obtaining articles, the adhesive exudes from the inside of the granule or article to the outside, making the surface of the granule or article sticky and often unusable.

It may also happen that the exudation mechanism is slow and that it only manifests itself during the storage or use of the articles made with that granule, or following their exposure to high temperatures; even in this case, this means that these articles are no longer usable.

### Description of the invention

The problem underlying the present invention is to make available a process for the recycling of adhesive tape waste as well as a polymeric composite obtained from such a recycling process, structurally and functionally designed to overcome the limits set out above with reference to the cited prior art. Within the scope of this problem, it is an object of the present invention to provide a process for the recycling of adhesive tape waste without the need for washing with strongly alkaline solutions or with organic solvents.

A further object of the invention is to provide a polymeric composite made with a higher percentage by weight of adhesive tape waste compared to the state of the art and which can also be extremely high, up to representing almost all of the polymeric composite itself, without the composite incurring undesired sticking and/or exudation phenomena of the adhesive substance over time.

An additional object of the present invention is to provide a process for the recycling of adhesive tape waste that is efficient, fast, easy to manage and has a low environmental impact.

This problem is solved and these objects are achieved by the present invention by a process for the recycling of adhesive tape waste and a polymeric composite obtainable from said process, according to the claims that follow.

In a first aspect thereof, therefore, the present invention is directed to a process for the recycling of adhesive tape waste comprising the mixing in melt phase of the following components:
a) from 0% to 95% by weight of one or more virgin or recycled thermoplastic polymers,
b) from 5% to 99.5% by weight of adhesive tape waste, and
c) alkaline-earth metal oxides and/or hydroxides.

Thanks to this process it is possible to obtain a polymeric composite that does not exhibit adhesive exudation phenomena since, during the mixing in melt phase process, alkaline-earth oxides and/or hydroxides react with the acid and/or ester component of the adhesive, neutralizing it and thus eliminating the sticky character of the adhesive itself.

In the case where the adhesive part comprises an ester component, the neutralization reaction is believed to involve a hydrolysis process, although the precise reaction mechanisms are not completely clear.

In this way, the composite directly obtained from the process of the invention can be easily handled or subjected to subsequent processing, alone or in combination with other polymers.

Such a composite may also advantageously contain a very high percentage of adhesive tape waste.

Furthermore, the process of the invention is advantageously simple from a technological point of view and extremely fast when compared with a process carried out according to the prior art in which an alkaline wash is provided. Furthermore, the process of the invention does not entail the generation of emissions harmful to the environment as would an incineration process or the handling of large volumes of alkaline aqueous solutions or organic solvents as would be implied by an alkaline or solvent washing process mentioned above.

In fact, it will be noted that the process of neutralization of the adhesive by alkaline-earth oxides or hydroxides takes place substantially "dry", inside the molten material, without the need for water.

The process is also extremely flexible, as it allows polymeric composites to be prepared from a wide variety of formulations.

Indeed, such formulations may consist almost entirely of adhesive tape waste or may comprise virgin or recycled thermoplastic polymers in extremely variable amounts. This variability is wide and can range from formulations in which such virgin or recycled thermoplastic polymers are the minor (or completely absent) component with respect to waste to instead represent the predominant weight component.

It should be noted that "mixing in melt phase" means a mixing of the components of the formulation that takes place at a temperature higher than the highest among all the melting and/or glass transition temperatures characterizing the thermoplastic polymers present in the formulation. Thermoplastic polymers are in fact divided into crystalline or semi-crystalline thermoplastic polymers and amorphous thermoplastic polymers. The melting temperature characterizes crystalline or semi-crystalline thermoplastic polymers and is the temperature at which the transition of state from the crystalline step to the liquid-viscous step takes place, while the glass transition temperature characterizes amorphous thermoplastic polymers and is the temperature above which they are viscous liquids.

Above such melting or glass transition temperatures the thermoplastic polymers are liquid and can therefore be mixed with other components according to a process defined as mixing in melt phase.

With thermoplastic polymers present in the formulation are meant the one or more virgin or recycled thermoplastic polymers possibly present as component a) and the thermoplastic polymers present in the component b), for example as a support layer of the adhesive tape and possibly constituting the core of the coil.

In a second aspect thereof, the present invention concerns a polymeric composite obtainable from the recycling process according to the first aspect. This polymeric composite, thanks to the reaction between the adhesive compound and the oxides/hydroxides of the alkali metals during the mixing in melt phase step, comprises a percentage, even relevant, of neutralized adhesive compound, for example in the form of a salt, which therefore does not have any residual tackiness and therefore allows the free use of the composite or its subsequent processing.

The percentage of neutralized adhesive compound present in the polymeric composite can vary between a few percentage points 2-3% up to 25%, also significantly affecting the mechanical and rheological properties of the final composite.

In particular, the higher the percentage in the polymeric composite of neutralized adhesive compound, the lower the mechanical characteristics (in particular the elastic modulus) of the polymeric composite obtained by the process. Such characteristics may therefore result in different applications of the composite.

In a third aspect thereof, the present invention relates to an article produced by using such a polymeric composite.

Advantageously, this article has a reduced environmental footprint compared to a similar article but obtained without waste.

This article can be made with a percentage of adhesive tape that can also be extremely high, resulting in an even smaller environmental footprint.

In addition, the performance and characteristics of the article are better preserved over time compared to a similar article having, in the formulation of the composite, alkali oxides and hydroxides.

In a fourth aspect thereof, the present invention concerns the use of such a polymeric composite as a masterbatch or filler material.

In this description as well as in the accompanying claims, certain terms and expressions are deemed to have, unless otherwise expressly indicated, the meaning expressed in the following definitions.

With reference to the components of the formulation, "adhesive tape waste" means that material deriving from the production process of the adhesive tape itself, consisting, for example, of scraps deriving from the process of cutting, or finishing, adhesive tapes and/or adhesive tapes that are defective or discarded for any other reason or, again, from adhesive tape already used. In addition, "virgin polymers" means polymers that have never been used in the manufacture of articles.

On the contrary, "recycled polymers" means polymers that have already been used in the manufacture of articles.

The term "neutralization" means a process that eliminates or makes completely negligible the sticky nature of such waste conferred by the adhesive, typically due to acid and/or ester functionalities. The effect of such neutralisation is such that the composite obtainable by mixing in melt phase a formulation providing for such waste is not sticky.

With reference to the possible formulations of the layers of an adhesive tape, the term "additive" indicates a chemical compound that is added, usually in small percentages with respect to the total of the formulation, for example less than 4% by weight, to confer certain qualities or improve certain characteristics, such as stability to UV rays, aging, etc.

The term "masterbatch" means a concentrated mixture (typically also polymer-based), intended to be diluted in a subsequent processing step, for example in a further extrusion process, together with other thermoplastic polymer matrices.

"Filler material" means a material that, dispersed within a given composition, behaves as inert, thus not performing a particular physical or chemical function.

In at least one of the above aspects, the present invention has one or more of the following preferred features.

In some embodiments, the component a), i.e. the virgin or recycled thermoplastic polymers, are polyolefin polymers, such as PP or PE, or PVC. As better described below, the presence of the component a) allows the mechanical characteristics of the polymeric composite obtained from the process to be appropriately varied, depending on its specific application. Preferably, the component a) comprises one or more recycled thermoplastic polymers, so as to reduce the amount of virgin raw materials in the composite.

In some embodiments, the component b), i.e. adhesive tape waste, represent at least 10%, preferably at least 20%, more preferably at least 30%, of the total formulation being melt mixed.

In some embodiments, the component c), i.e. alkaline earth metal oxides and/or hydroxides, is equal to or greater than 0.2% by weight of the component b), preferably greater than 1% by weight with respect to the component b), more preferably less than 30% by weight with respect to the component b) and more preferably is between 2% and 10% by weight with respect to the component b).

Preferably, the component c) is less than 60%, more preferably less than 30% and even more preferably between 1% and 10% by weight with respect to the sum of the components a), b), c) and, if present also of the component d), described below.

Preferably the component c) is selected from CaO, MgO, Ca(OH)₂, Mg(OH)₂, and mixtures thereof.

Advantageously, these oxides and hydroxides are easily available and low cost when compared with other alkaline-earth oxides and hydroxides; they are also components normally and historically added to polymeric composites because they have a filling function, to reduce the costs of the composite itself, or improvement, if they improve some characteristics of the polymers themselves.

More preferably the component c) is selected from CaO, MgO, and mixtures thereof.

Although Ca(OH)₂ and Mg(OH)₂ are still effective in neutralizing the adhesive, CaO and MgO exert the same action at lower percentages.

In some embodiments, the adhesive tape waste comprises one or more acid-based adhesives.

Preferably, such adhesives have an acid value of at least 2 mgK_{OH}/g. This acidity range includes the adhesives of the most commonly used adhesive tapes.

In some embodiments such waste comprises one or more acrylic and/or methacrylic adhesives.

In some embodiments, the adhesive tape waste comprises a polyolefin-based adhesive support, preferably polypropylene or polyethylene.

In some embodiments the melt mixed formulation comprises the following components:
a) 0% by weight of one or more virgin or recycled thermoplastic polymers,
b) from 75% to 99.5% by weight, preferably from 85% to 99.0%, more preferably from 90% to 99.0% by weight, of adhesive tape waste, and
c) alkaline-earth metal oxides and/or hydroxides.

Advantageously, this formulation allows to obtain a composite material, for example in the form of granules, comprising an extremely high percentage of waste, even substantially pure (unless alkaline earth oxides/hydroxides). This makes it possible to recycle large amounts of adhesive tape waste, obtaining a material that can already be manipulated and used on its own.

It will be noted that without the presence of the alkaline-earth metal oxides and/or hydroxides the obtaining of a composite starting from a formulation with such a high percentage of waste would not be possible, because the sticky nature of the adhesive would complicate the extrusion and would hinder the granulation of the composite itself and any subsequent further operation, such as the storage and subsequent use of such granule.

The presence of the component c) instead leads to the neutralization of the adhesive during mixing and makes it possible to obtain a granule that is manipulable even if composed for almost its entirety of such waste.

The polymeric composite thus obtained can be used as a masterbatch or as a filler material.

Due to the high percentage of neutralized adhesive compound present in the formulation (up to 25%), the polymeric composite obtained according to these embodiments of the process, has low elastic modulus values, so that, if used as such, it is preferably usable in applications that do not require high mechanical characteristics, for example as a filler material in bituminous sheaths.

In alternative embodiments, the melt-mixed formulation comprises the following components:
a) from 40% to 95% by weight of one or more virgin or recycled thermoplastic polymers,
b) from 5% to 60% by weight, preferably between 7% and 50% by weight, more preferably between 10% and 40% by weight, of adhesive tape waste, and
c) alkaline-earth metal oxides and/or hydroxides.

Thanks to the presence of a substantial percentage of thermoplastic polymers (component a)), the polymeric composite obtained with these formulations has higher mechanical characteristics and can therefore be used to make thermoplastic articles without further dilution (these formulations are called final formulations).

In some preferred embodiments, the melt-mixed formulation further comprises a component d), formed by one or more compatibilizing polymers between the adhesive part of the component b) and the polymer constituting the support of the component b), and, if present, also component a).

The adhesive component of the adhesive tape, in fact, is generally formed by polar polymers, while the support of the adhesive tape, on the contrary, is often formed by apolar polymers (for example polyolefins). Once the adhesive is neutralised by the alkaline earth oxides/hydroxides such polymers could tend to separate within the composite, deteriorating its mechanical properties, while the presence of a compatibilizing compound prevents this unwanted condition.

Preferably, such one or more compatibilizing polymers are selected from ethylene-vinylacetate copolymers, ethylene-butylacrylate copolymers and ethylene-methacrylic acid copolymers.

Preferably such component d) is present in the formulation with a percentage between 1% to 10% by weight with respect to the component b).

The embodiment providing for the presence of the component d) is perfectly compatible and integrable with the embodiment in which the component a) comprises one or more thermoplastic recycling polymers.

Both for the embodiments in which the component a) is absent and for those where it is present, the adhesive tape waste used in the recycling process of the invention can contain the core, when this is in a thermoplastic material, for example PP.

In such embodiments the core need not necessarily be of the same polymer as the support layer or any virgin or recycled thermoplastic polymer(s) of the component a), but it is sufficient that they are of the same chemical nature, e.g. all polyolefins.

A preferred embodiment is represented by the formulation wherein the support tape, the core and any component a) are all in PP.

In some embodiments, no alkali oxides and/or hydroxides are present among the components of the formulation.

Such embodiments are compatible and integrable with all embodiments so far illustrated.

The composite obtained without alkali oxides and/or hydroxides is less subject to degradation phenomena, both during its preparation and during its entire life cycle.

The degradation by these alkali oxides and hydroxides, which can be triggered during mixing in melt phase, is in fact favoured by the high temperatures that this process requires, temperatures that are well above the melting or glass transition temperature of the thermoplastic polymers. Furthermore, if the mixing in melt phase takes place by means of an extruder, as typically happens for any process for manufacturing a composite at an industrial level, the mechanical stress induced by the extruder itself favours the degradation of the polymers by means of these alkaline components; this phenomenon is also further accentuated when the extruder used is of the twin-screw type.

The degradation by alkaline substances during the life cycle of the composite, from its manufacture to its use for the manufacture of an article up to the end of the life of the article itself, can also be accelerated by its exposure to atmospheric agents or high temperatures.

Advantageously, since such alkaline oxides and/or hydroxides do not necessarily have to be present in the composite according to the present invention since the neutralizing action of the adhesive is exerted by the alkaline-earth oxides and/or hydroxides, it therefore follows that the corresponding composite is more stable over time when these are absent. In some embodiments, the mixing in melt phase is obtained by an extrusion process, which, specifically, is a reactive extrusion process since during the extrusion step the chemical reaction of neutralization and possibly hydrolysis also takes place.

Advantageously, extrusion technology is a well-established technology in the art, both theoretically and technologically. It is also easy to adopt at an industrial level, does not involve the management of significant volumes of additional material that must then be disposed of, unlike alkaline washes, and has a low environmental impact when compared with the same alkaline washes or with washes with solvents or with the incineration of adhesive tape waste.

When the formulation also includes component a), the extrusion is preferably carried out using a twin-screw extruder, since it has an efficiency of dispersion and mixing of the components superior to the single-screw extruder, while when component a) is absent, the extrusion can be carried out indifferently with both a twin-screw extruder and a single-screw extruder.

In some embodiments, the process for the recycling of adhesive tape waste comprises a preliminary step of removing the core from such waste. This step is not necessary when the core is in a thermoplastic polymer, preferably compatible with the support layer and with any component a), if present.

In this case, the mixing in melt phase must take place above the melting temperature or the glass transition temperature of the polymer that constitutes the core.

This removal step is not necessary, for example, when the core, the support layer and any component a) are all in PP.

In other embodiments, for example when the core is made of cardboard or of a polymer not compatible with the support layer and with any component a), the preliminary step of removing the core may instead be necessary, especially when said core is a particularly significant component of the waste. In some embodiments, the process for the recycling of adhesive tape waste comprises a preliminary step of shredding and/or grinding such waste prior to mixing in melt phase.

Preferably, in case the process comprises the preliminary step of removing the core from such waste, said shredding and/or grinding step is conducted between the step of removing the core and the mixing in melt phase step. In this way, the elimination of the core is operationally simpler and faster. In some embodiments, an agglomerator for adhesive tape waste is present upstream of the extruder.

The agglomerator shreds this waste and feeds it to the extruder.

The process in such embodiments thus comprises a shredding step obtained by agglomerator.

Advantageously, this allows the step for shredding this waste to be carried out in line and continuously with the extrusion process itself.

In some embodiments downstream of the extruder there is also a granulator. The process in such embodiments then comprises a granulation step after the extrusion step.

This advantageously allows the composite to be obtained in the form of granules, which can be used for the subsequent manufacture of an article, for example by using an injection press, or as a masterbatch or as a filler material.

The characteristics and advantages of the invention will become clearer from the detailed description of an embodiment shown, by way of non-limiting example, with reference to the appended drawings wherein:
- figure 1 is a schematic representation of a roll of adhesive tape;
- figure 2 is a schematic representation of a mixing in melt phase process by extruder according to the present invention.

With reference to the attached figures, 1 denotes overall a roll, or reel, of adhesive tape in common use, for example a roll of packaging adhesive tape, consisting of an adhesive tape 10 wound around a core 20.

The adhesive tape 10 in turn comprises a support layer 13 and an adhesive layer 11.

Preferably the support layer 13 is made of polypropylene (PP) and the adhesive is an acrylic based adhesive compound.

In some types of adhesive tapes 10, a primer layer 12 is interposed between the support layer 13 and the adhesive layer 11, while a release layer 14 is located on the support layer 13 on the opposite side to the adhesive layer 11. The process of recycling adhesive tape waste involves the collection of such waste from, for example, the process of production of adhesive tape.

The adhesive tape waste 21 are fed by means of a hopper 311 to an extruder 31 together with the oxides and/or hydroxides of alkaline-earth metals 22 and possibly together with granules of one or more virgin or recycled thermoplastic polymers 23. The extruder 31 is provided with a worm screw 312, housed inside a cylinder 313, the rotation of which is driven by a motor 314. The cylinder 313 has a suitable temperature profile, obtained from a heater 315. The passage of the waste 21, of the oxides and/or hydroxides of alkaline-earth metals 22 and possibly of the granules 23 in the space between the cylinder 313 and the worm screw 312 at a temperature that, excluding the zone closest to the hopper, is well above the melting and/or glass transition temperature of the thermoplastic polymers present in the formulation, involves the mixing in melt phase of the various components of the formulation and thus obtaining the polymeric composite 24.

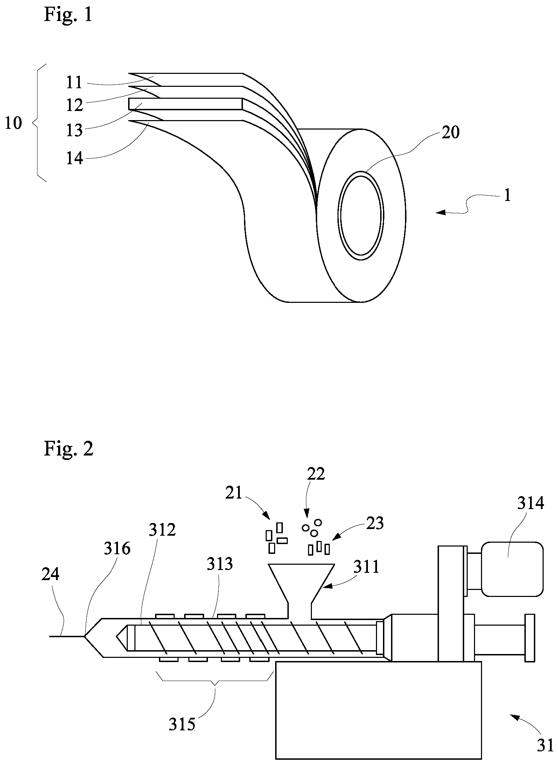

The polymeric composite 24 exits the extruder 31 at the opposite end of the cylinder 313 with respect to the hopper 311 at an exit head 316. Such a composite typically comes out in the form of one or more wires, which are subsequently cooled and cut into granules within a granulator (both not reported in Figure 2).

### Example 1

In this first example, the process of recycling adhesive tape waste involves the mixing in melt phase of certain formulations comprising the following components:
a) virgin PP,
b) adhesive tape waste, and
c) CaO
d) EVA

The components a) to d) are present in the different formulations in the following weight fractions:

| Formulation | Comp. a) [% by weight] | Comp. b) [% by weight] | Comp. c) [% by weight] | Comp. d) [% by weight] |
|---|---|---|---|---|
| 1 | 18 | 75 | 4 | 3 |
| 2 | 47 | 50 | 3 | 2 |
| 3 | 67 | 30 | 2 | 1 |

The adhesive tape comprises a PP support tape and an adhesive compound layer; the adhesive compound in turn consists of a mixture of acrylic acid-based substances and derived natural substances, such as rosin esters and additives of various kinds.

Adhesive tape waste are scraps deriving from the production process of the adhesive tape and are sent to an agglomerator located upstream of the extruder, which feeds them directly to the extruder itself in shredded form. The extruder is also fed with virgin PP, EVA and calcium oxide in the percentages indicated above.

The extruder has a working temperature range between 150 °C and 250 °C set to have a suitable temperature profile. For example, the extruder may have 7 different temperature zones T1-T7 passing from the feed zone to the outlet nozzle, with T1 between 150 °C and 180 °C, T2 between 190 °C and 250 °C, T3 between 190 °C and 250 °C, T4 between 190 °C and 250 °C, T5 between 170 °C and 200 °C, T6 between 170 °C and 180 °C, and T7 between 170 °C and 180 °C.

At the exit of the extruder, the composite is formed by one or more threads that pass into a cooling tank and arrive at a granulator, which transforms the thread into composite granules. Obviously, the granulator can be of a different type, for example liquid ring or immersed cut.

The granules obtained according to the various formulations indicated above are not sticky and remain so for an indefinite time, at least for 24 months. The granules thus obtained were then used to obtain articles of various kinds, for example for the production of plastic artefacts that can be used in construction, such as toolboxes and igloos for the construction of aerated wasps.

### Example 2

In this second example, the process of recycling adhesive tape waste involves the mixing in melt phase of certain formulations comprising the following components:
b) adhesive tape waste, and
c) CaO
d) EVA

The components b), c) and d) are present in the different formulations in the following weight fractions:

| Formulation | Component b) [% by weight] | Component c) [% by weight] | Component d [% by weight] |
|---|---|---|---|
| 4 | 92 | 4 | 4 |
| 5 | 93 | 5 | 2 |
| 6 | 95 | 5 | 0 |

The adhesive tape waste is similar to those of example 1.

The adhesive tape waste is sent to an agglomerator located upstream of the extruder, which feeds them directly to the extruder itself in shredded form.

The extruder is also fed with CaO and EVA in the percentages indicated above. The extruder has a working temperature range similar to that of example 1. At the exit of the extruder the composite is transformed into granules in a manner analogous to example 1.

The granules obtained according to the different formulations are not sticky and remain so even after a long time, at least 24 months.

The granules thus obtained were then used as masterbatches and mixed with virgin PP from 5 to 50% using a twin-screw extruder, or as filler material inside bituminous sheaths.

## Claims

1. Process for the recycling of adhesive tape waste comprising the mixing in melt phase of the following components:
a) from 0% to 95% by weight of one or more virgin or recycled thermoplastic polymers,
b) from 5% to 99.5% by weight of adhesive tape waste, and
c) alkaline-earth metal oxides and/or hydroxides.

2. Process according to claim 1, wherein the adhesive tape waste comprises one or more acid-based adhesives.

3. Process according to any one of the preceding claims, wherein the adhesive tape waste comprises one or more acrylic and/or methacrylic adhesives.

4. Process according to any one of the preceding claims, comprising:
a) 0% by weight of said one or more virgin or recycled thermoplastic polymers,
b) from 75% to 99.5% by weight of said adhesive tape waste, and
c) alkaline-earth metal oxides and/or hydroxides.

5. Process according to any one of claims 1 to 3, further comprising:
a) from 40% to 95% by weight of said one or more virgin or recycled thermoplastic polymers,
b) from 5% to 60% by weight, preferably between 7% and 50% by weight, more preferably between 10% and 40% by weight, of adhesive tape waste, and
c) alkaline-earth metal oxides and/or hydroxides.

6. Process according to any one of the preceding claims, wherein the mixing in melt phase further comprises a component d) formed by one or more compatibilizing polymers between the adhesive part of the component b) and the polymer constituting the support of the component b), and, if present, also the component a), wherein said compatibilizing polymers are preferably selected from ethylene-vinylacetate copolymers, ethylene-butylacrylate copolymers and ethylene-methacrylic acid copolymers.

7. Process according to any one of the preceding claims, wherein the component c) is equal to or greater than 0.2% by weight with respect to the component b), preferably greater than 1% by weight with respect to the component b), more preferably less than 30% by weight with respect to the component b) and more preferably it is comprised between 2% and 10% by weight with respect to the component b).

8. Process according to claim 7, wherein the component c) is less than 60%, more preferably less than 30%, and even more preferably comprised between 1% and 10% by weight with respect to the sum of the components a), b), c) and d).

9. Process according to any one of the preceding claims, wherein component c) is selected from CaO, MgO, Ca(OH)₂, Mg(OH)₂, and mixtures thereof, and preferably is selected from CaO, MgO, and mixtures thereof.

10. Process according to any one of the preceding claims, wherein no alkali oxides and/or hydroxides are present.

11. Process according to any one of the preceding claims, wherein the mixing in melt phase is obtained by extrusion.

12. Polymeric composite obtainable from a process for the recycling of adhesive tape waste according to any one of the preceding claims.

13. Article produced by using the polymeric composite according to the preceding claim.

14. Use of the polymeric composite according to claim 12 as a masterbatch or filler material.
